# EUROPEAN PATENT APPLICATION

(11) **EP 3 563 706 A1**
(43) Date of publication of application: **06.11.2019**
(21) Application number: 16925877.9
(22) Date of filing: 30.12.2016
(51) Int. Cl.: A43B 3/00

(54) **SHOE AND CONTROL METHOD THEREFOR**

(71) Applicant: Shenzhen Royole Technologies Co., Ltd., Shenzhen, Guangdong 518172 (CN)
(72) Inventor: YANG, Fan, Shenzhen Guangdong 518052 (CN); LIN, Qi, Shenzhen Guangdong 518052 (CN); WANG, Chaogang, Shenzhen Guangdong 518052 (CN)
(74) Representative: Hamer, Christopher K.
(86) International application number: PCT/CN2016/113660
(87) International publication number: WO 2018/120089

(57) **Abstract**

A shoe (10, 50, 60) includes a sole (12, 52, 62), a vamp (11, 51, 61) and a touch interaction device (13, 53, 63). The touch interaction device (13, 53, 63) includes a support body (131, 531, 631), a light-emitting unit (133, 533, 633), a flexible touch sensor (135, 535, 635) and a control module (137, 537, 637). The support body (131, 531, 631) is attached to the vamp (11, 51, 61), the light-emitting unit (133, 533, 633) is arranged on the support body (131, 531, 631), and the flexible touch sensor (135, 535, 635) is attached to the support body (131, 531, 631) and covers the light-emitting unit (133, 533, 633). The control module (137, 537, 637) is electrically coupled to the light-emitting unit (133, 533, 633) and the flexible touch sensor (135, 535, 635). The present shoe (10, 50, 60) can improve interaction with a wearer, and increase the fun of wearing.

## Description

### TECHNICAL FIELD

The present disclosure relates to the technical field of shoes, and more particularly relates to a shoe capable of interactive games and a control method thereof.

### BACKGROUND

At present, in order to make wearing shoes more interesting, fun shoes products such as shining shoes, music shoes and so on, have already emerged on the market. For example, soles of existing shoes have been embedding with pressure sensors and corresponding light-emitting modules and vocalization modules. When the pressure sensor detects pressure from the wearer's foot, the light-emitting module in the corresponding shoe is triggered to emit light, and the vocalization module in the corresponding shoe is triggered to make a sound, thereby realize the interaction with the wearer by means of sound and light. However, the existing fun shoes are monotonous in function, and usually trigger corresponding functions such as luminous or vocal by detecting sole pressure, which brings poor interaction.

### SUMMARY

In view of the above problems in related art, embodiments of the present disclosure provide a shoe and a control method thereof, to enhance the interaction with a wearer and increase the fun of wearing.

A shoe includes a sole and a vamp. The vamp is coupled to the sole, and the sole and the vamp cooperate to define an opening between the vamp and the sole. The shoe further includes a touch interaction device which comprises a support body, a light-emitting unit, a flexible touch sensor and a control module. The support body is attached to the vamp. The plurality of light-emitting units are arranged on the support body. The flexible touch sensor is attached to the support body and covers the light-emitting units. The control module is electrically coupled to the light-emitting unit and the flexible touch sensor.

A control method of a shoe includes the follows. The control module controls a plurality of light-emitting units to emit light in a preset manner. The flexible touch sensor detects a touch instruction to the plurality of light-emitting units during a preset time period in which each of the plurality of light-emitting units is emitting light. The control module is triggered to count up when a touch instruction to the light-emitting units is detected.

The shoe is provided with the support body on the vamp, and the plurality of light-emitting units and the flexible touch sensor covering at least the plurality of light-emitting units on the support body, so that the flexible touch sensor can detect the touch instructions to the light-emitting units during the preset time period in which each of the light-emitting units is emitting light, and then the control module is triggered to count up when the touch instruction is detected. When the plurality of light-emitting units are controlled to emit light according to the preset manner, continuous game interaction can be achieved, thereby enhancing interaction with the wearer and increasing the fun of wearing.

### BRIEF DESCRIPTION OF THE DRAWINGS

In order to more clearly illustrate the technical solutions in the embodiments of the present disclosure, the following descriptions will briefly illustrate the accompanying drawings described in the embodiments.
FIG. 1 is a first schematic structural diagram of a shoe according to an embodiment of the present disclosure.
FIG. 2 is a schematic diagram of a bottom surface of a sole of the shoe illustrated in FIG. 1.
FIG. 3 is a schematic diagram of a support body of the shoe illustrated in FIG. 1.
FIG. 4 is a schematic diagram of a cover of the shoe illustrated in FIG. 1.
FIG. 5 is a second schematic structural diagram of a shoe according to an embodiment of the present disclosure.
FIG. 6 is a third schematic structural diagram of a shoe according to an embodiment of the present disclosure.
FIG. 7 is a first schematic flowchart of a control of a shoe according to an embodiment of the present disclosure.
FIG. 8 is a second schematic flowchart of a control method of a shoe according to an embodiment of the present disclosure.

### DETAILED DESCRIPTION OF ILLUSTRATED EMBODIMENTS

The technical solutions of embodiments of the present disclosure will be described clearly and completely in the following in combination with the accompanying drawings of the embodiments of the present disclosure. Obviously, the described embodiments are merely a part of embodiments of the present disclosure, but not all of the embodiments. All other embodiments obtained by those of ordinary skill in the art without creative efforts based on the embodiments of the present disclosure shall fall within the protection scope of the present disclosure.

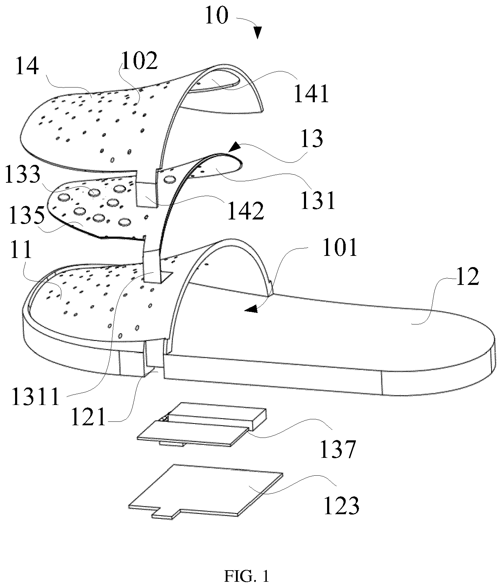

Referring to FIG. 1, in one embodiment of the present disclosure, a shoe 10 is provided, which includes a vamp 11 and a sole 12. The vamp 11 is coupled to the sole 12, and an opening 101 is formed between the vamp 11 and the sole 12. The shoe further includes a touch interaction device 13. The touch interaction device 13 includes a support body 131, a light-emitting unit 133, a flexible touch sensor 135, and a control module 137. The support body 131 is attached to the vamp 11. The light-emitting unit 133 is arranged on the support body 131. The flexible touch sensor 135 is attached to the support body 131 and covers the light-emitting unit 133. The control module 137 is electrically coupled to the light-emitting unit 133 and the flexible touch sensor 135.

In one embodiment, the control module 137 controls the light-emitting unit 133 to emit light before a touch instruction is detected by the flexible touch sensor 135. The amount of the light emitting unit 133 is plural. The control module 137 controls a plurality of the light-emitting units 133 to emit light according to a preset manner. The flexible touch sensor 135 detects a touch instruction to the plurality of light-emitting units 133 during a preset time period in which each of the light-emitting units 133 is emitting light, and triggers the control module 137 to count up when the touch instruction to the light-emitting units 133 is detected. In the embodiment of the disclosure, the light-emitting units 133 are light emitting diodes (LEDs), and the flexible touch sensor 135 is a transparent flexible touch screen. It can be understood that, the control module 137 can also control the light-emitting units 133 to emit light after the touch instruction is detected by the flexible touch sensor 135.

It can be understood that, the preset manner may be to control the plurality of light-emitting units 133 to randomly emit light, each light-emitting unit 133 is automatically turned off after emitting light for the preset time period, and then randomly control a next light-emitting unit 133 to emit light, and repeats the above process. When one of the light-emitting units 133 is turned off after emitting light for the preset time period, the one of the light-emitting units 133 may be controlled to emit light again. The flexible touch sensor 135 covers each of the light-emitting units 133, and can receive and distinguish touch instructions to different light-emitting units 133. In this way, while the plurality of light-emitting units 133 are controlled to emit light in the preset manner, the flexible touch sensor 135 may detect the touch instruction to each light-emitting unit 133, and according to whether the touch instruction is to the light-emitting unit 133 that is currently emitting light, thereby realizing an accumulative counting game similar to the hamster. For example, if a touch instruction to a certain light-emitting unit 133 is detected by the flexible touch sensor 135 while the certain light-emitting unit 133 is emitting light, the control module 137 is triggered to count up. If a touch instruction to a light-emitting unit 133 that isn't currently emitting light is detected by the flexible touch sensor 135, the control module 137 won't be triggered to count up. In the embodiment, the touch interaction device 13 works in a game mode.

It can be understood that, in one embodiment, the touch interaction device 13 may further include an audio module (not shown) electrically coupled to the control module 137. When the touch instruction to the light-emitting units 133 is detected by the flexible touch sensor 135, the control module 137 is further configured to trigger the light-emitting units 133 to change colors, and trigger the audio module to play a prompt tone. For example, if a touch instruction to a certain light-emitting unit 133 is detected by the flexible touch sensor 135 while the certain light-emitting unit 133 is emitting light, the control module 137 is triggered to count up, and the audio module is triggered to play a first prompt tone. If a touch instruction to a light-emitting unit 133 that isn't currently emitting light is detected by the flexible touch sensor 135, the audio module is triggered to play a second prompt tone.

It can be understood that, in one embodiment, the touch interaction device 13 can also work in a cool mode. Specifically, touch instructions to different light-emitting units 133 may be received by the flexible touch sensor 135, and the control module 137 may be triggered, according to different positions at which the touch instructions are received, to control at least one of the light-emitting units 133 at the corresponding position to emit light. In addition, the control module 137 may also be triggered, according to different touch operations corresponding to the touch instructions, to control the at least one of the light-emitting units 133 at the corresponding position to change their illuminating states. For example, by long-pressing on a certain area of the flexible touch sensor 135, the control module 137 is triggered to control the light-emitting units 133 on the corresponding area to change illuminating colors. By double-clicking on a certain area of the flexible touch sensor 135, the control module 137 is triggered to control the light-emitting units 133 on the corresponding area to maintain a blinking state, etc.

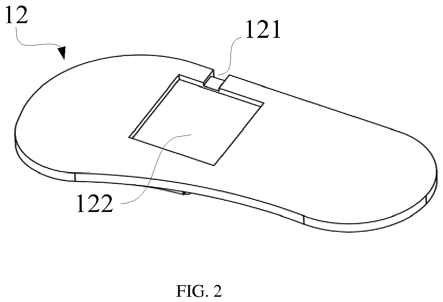

Referring to FIGs. 1 and 2, the sole 12 defines a groove 121 on its one side corresponding to the opening 101, and the touch interaction device 13 is partially received in the groove 121. The sole 12 further defines, on its bottom surface, a recess 122 (as illustrated in FIG. 2) communicating with the groove 121, and includes a cover plate 123 (as illustrated in FIG. 1) for sealing the recess 122. The control module 137 is received in the recess 122. It can be understood that, the control module 137 may include a power supply, a controller, and peripheral circuits (not illustrated). The power supply, the controller, and the peripheral circuits are integrated on a circuit board, and the circuit board is received in the recess 122. It can be understood that, the touch interaction device 13 may further include a power switch and a mode switch (not illustrated). The power switch is configured to turn on or turn off power supply of the touch interaction device 13, and the mode switch is configured to adjust the working modes (such as the game mode or the cool mode) of the touch interactive device 13. The power switch and the mode switch may be arranged on the circuit board or on the support body 131. It can be understood that, the power switch and the mode switch may also be replaced by a single switch button that can perform corresponding switch functions by distinguishing different pressing duration. For example, a long-press corresponds to turning on or turning off the power, a short-press is configured to switch between different working modes.

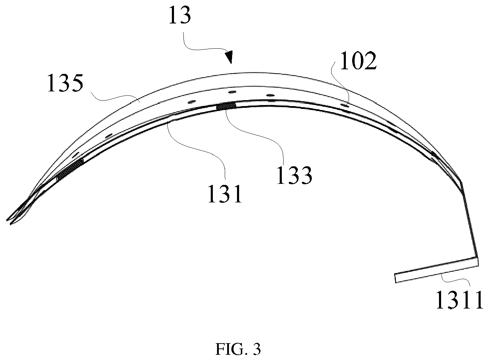

Referring to FIGs. 1 and 3 , the support body 131 is attached to an upper surface of the vamp 11. A flexible circuit board 1311 is arranged at a position of the support body 131 corresponding to the groove 121. One end of the circuit board 1311 is electrically coupled to the plurality of light-emitting units 133 and the flexible touch sensor 135, and an other end passes the groove 121 and extends to the recess 122, and is electrically coupled to the control module 137. It can be understood that, the support body 131 may be a hollow double-layer structure or a non-hollow structure formed in one body. The light-emitting units 133 are embedded in the support body 131 and exposed from an upper surface of the support body 131. The support body 131 defines air holes 102 therein. The light-emitting units 133 are close to the air holes 102 and spaced apart from the air holes 102.

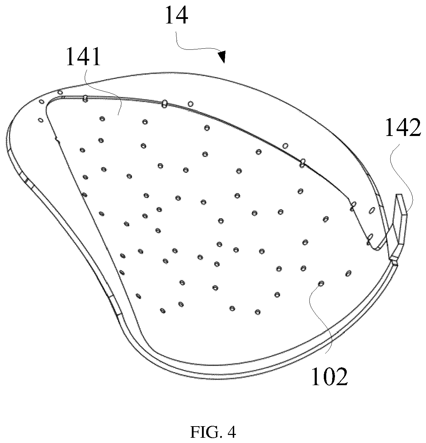

Referring to FIGs. 1 and 4, the shoe 10 further includes a cover 14. The cover 14 defines, on its lower surface, a limit recess 141 (as illustrated in FIG. 4) for receiving the support body 131. The cover 14 includes a baffle plate 142 arranged at a position corresponding to the groove 121. The baffle plate 142 is inserted into the groove 121 to cover the flexible circuit board 1311 and seals the groove 121. In the embodiment, the support body 131 and the cover 14 may be arranged on the vamp 11 in turn by glue bonding, and the cover 14 is made of a thin transparent material, so that the light emitted by the light-emitting units 133 can pass through the cover 14, and the flexible touch sensor 135 can receive the touch instructions through the cover 14. Optionally, the cover 14 may also define a plurality of through-holes in positions each corresponding to one of the light-emitting units 133, the through-hole is slightly larger than the light-emitting unit 133, thereby exposing the light-emitting units 133 and the flexible touch sensor 135 covering the light-emitting units 133. It can be understood that, the vamp 11, the support body 131 and the cover 14 are all provided with air holes 102 that are correspondingly aligned and penetrated to each other, to achieve ventilation while wearing.

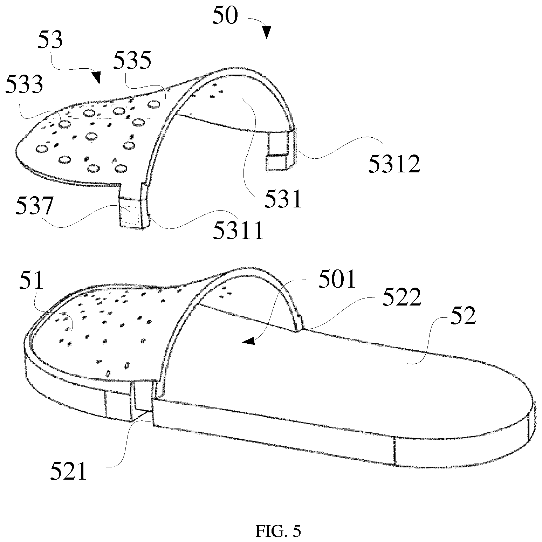

Referring to FIG. 5, in one embodiment of the present disclosure, a shoe 50 is provided, which includes a vamp 51 and a sole 52. The vamp 51 is coupled to the sole 52, and an opening 501 is formed between the vamp 51 and the sole 52. The shoe further includes a touch interaction device 53. The touch interaction device 53 includes a support body 531, a light-emitting unit 533, a flexible touch sensor 535, and a control module 537. The support body 531 is attached to the vamp 51. A plurality of the light-emitting units 533 are arranged on the support body 531. The flexible touch sensor 535 is attached to the support body 531 and covers the light-emitting units 533. The control module 537 is electrically coupled to the light-emitting units 533 and the flexible touch sensor 535.

In one embodiment, the amount of the light emitting units 533 is plural. The control module 537 controls the plurality of light-emitting units 533 to emit light according to a preset manner. The flexible touch sensor 535 detects a touch instruction to the light-emitting units 533 during a preset time period in which each of the light-emitting units 533 is emitting light, and triggers the control module 537 to count up when the touch instruction to the light-emitting units 533 is detected. In an embodiment of the disclosure, the light-emitting units 533 are LEDs, and the flexible touch sensor 535 is a transparent flexible touch screen.

In the present embodiment, the sole 52 defines a first groove 521 and a second groove 522 respectively on its two sides corresponding to the opening 501. The support body 531 includes a first holding portion 5311 and a second holding portion 5312 respectively arranged on two sides of the support body 531 and corresponding to the opening 501. The control module 537 is arranged in the first holding portion 5311, and is received in the first groove 521 through the first holding portion 5311. Alternatively, the control module 537 is arranged in the second holding portion 5312, and is received in the second groove 522 through the second holding portion 5312. The touch interaction device 53 is detachably coupled to the sole 52 through an engagement of the first holding portion 5311/the second holding portion 5312 and the first groove 521/the second groove 522, respectively. It can be understood that, by detachably setting the touch interaction device 53, it is convenient for the wearer to replace a main body (i.e., the vamp 51 and the sole 52) or the touch interaction device 53 of the shoe 50 as needed.

It can be understood that, the touch interaction device 53 described in this embodiment differs from the touch interaction device 13 of the embodiment illustrated in FIG. 1 to FIG. 4 only in the structure and the combination with the vamp 51 and the sole 52. The function of the touch interaction device 53 may be the same as that of the touch interaction device 13, for example, the game mode and the cool mode may be included. Details may be referred to the related description in the embodiment illustrated in FIG. 1 to FIG. 4, which will not be described herein again.

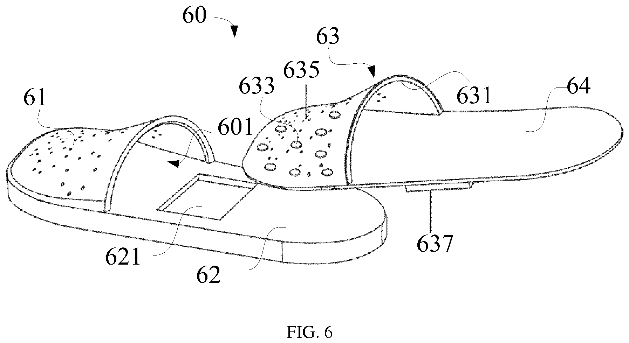

Referring to FIG. 6, in one embodiment of the present disclosure, a shoe 60 is provided, which includes a vamp 61 and a sole 62. The vamp 61 is coupled to the sole 62, and an opening 601 is formed between the vamp 61 and the sole 62. The shoe further includes a touch interaction device 63 and an inner pad 64. The touch interaction device 63 includes a support body 631, a light-emitting units 633, a flexible touch sensor 635, and a control module 637. The support body 631 is coupled to the inner pad 64, and is attached to a lower surface of the vamp 61. The light-emitting unit 633 is embedded in the support body 631. The flexible touch sensor 635 is attached to an upper surface of the support body 631 and covers the light-emitting unit 633. The inner pad 64 is attached to an upper surface of the sole 62. The control module 637 is arranged at a bottom of the inner pad 64, and electrically coupled to the light-emitting unit 633 and the flexible touch sensor 635 through a flexible circuit board (not illustrated). The sole 62 defines a receiving recess 621 at a position corresponding to the control module 637 for receiving the control module 637.

In one embodiment, the amount of the light emitting units 533 is plural. The control module 637 controls a plurality of the light-emitting units 633 to emit light according to a preset manner. The flexible touch sensor 635 detects a touch instruction to the light-emitting units 633 during a preset time period in which each of the light-emitting units 633 is emitting light, and triggers the control module 637 to count up when the touch instruction to the light-emitting units 633 is detected. In an embodiment of the disclosure, the light-emitting units 633 are LEDs, and the flexible touch sensor 635 is a transparent flexible touch screen. By connecting the support body 631 of the touch interaction device 63 with the inner pad 64, the touch interaction device 63 and the inner pad 64 together form a detachable structure, thereby facilitating the wearer to replace a main body (i.e., the vamp 61 and the sole 62) or the touch interaction device 63 and the inner pad 64 of the shoe 60 as needed.

It can be understood that, the function of the touch interaction device 63 described in this embodiment may be the same as that of the touch interaction device 13 of the embodiment illustrated in FIG. 1 to FIG. 4, for example, the game mode and the cool mode may be included. Details may be referred to the related description in the embodiment illustrated in FIG. 1 to FIG. 4, which will not be described herein again.

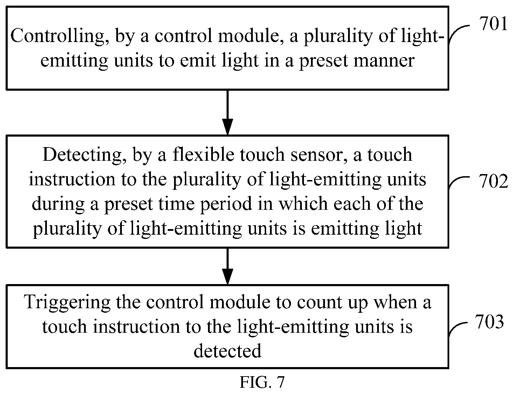

Referring to FIG. 7, in an embodiment of the present disclosure, a control method of the shoe described in any one of the embodiments of FIG. 1 to FIG. 6 is provided, which includes at least the following operations.

Step 701, the control module controls the plurality of light-emitting units to emit light in a preset manner.

Step 702, the flexible touch sensor detects a touch instruction to the plurality of light-emitting units during a preset time period in which each of the plurality of light-emitting units is emitting light.

Step 703, the control module is triggered to count up when the touch instruction to the light-emitting units is detected.

The control method further includes the follows after the touch instruction to the light-emitting units is detected. The light-emitting units are triggered to change colors, and the audio module is triggered to play a first prompt tone.

The control method further includes the follows. A touch instruction to the light-emitting units that aren't emitting light is detected, during a preset time period in which each of the light-emitting units is emitting light. The audio module is triggered to play a second prompt tone, when the touch instruction to a light-emitting unit that isn't emitting light is detected.

It can be understood that, the operations and the specific implementation of the method in this embodiment may also be referred to the related description in the embodiment illustrated in FIG. 1 to FIG. 6, which will not be described herein again.

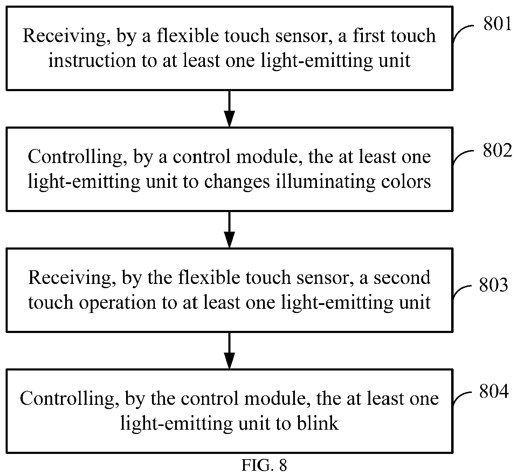

Referring to FIG. 8, in an embodiment of the present disclosure, a control method of the shoe described in any one of the embodiments of FIG. 1 to FIG. 6 is provided, which includes at least the following operations.

Step 801, the flexible touch sensor receives a first touch instruction to at least one light-emitting units.

Step 802, the control module controls the at least one light-emitting units to change illuminating colors.

The first touch instruction is a long-press touch instruction.

The control method further includes the follows.

Step 803, the flexible touch sensor receives a second touch instruction to the at least one light-emitting units.

Step 803, the control module controls the at least one light-emitting units to blink.

The second touch instruction is a double-click touch instruction.

It can be understood that, the operations and the specific implementation of the method in this embodiment may also be referred to the related description in the embodiment illustrated in FIG. 1 to FIG. 6, which will not be described herein again.

The shoe is provided with the support body on the vamp, and the plurality of light-emitting units and the flexible touch sensor covering at least the plurality of light-emitting units on the support body, so that the flexible touch sensor can detect the touch instructions to the light-emitting units during the preset time period in which each of the light-emitting units is emitting light, and then the control module is triggered to count up when the touch instruction is detected. When the plurality of light-emitting units are controlled to emit light according to the preset manner, continuous game interaction can be achieved, thereby enhancing interaction with the wearer and increasing the fun of wearing.

The above is only the preferred embodiment of the present disclosure, and the scope of the present disclosure is not limited thereto. Those skilled in the art can understand all or part of the process of implementing the above embodiments, and equivalent changes made according to the claims of the present disclosure are still within the scope of the disclosure.

## Claims

1. A shoe, comprising:
a sole and a vamp coupled to the sole, the sole and the vamp cooperating to define an opening between the vamp and the sole;
a touch interaction device, comprising:
a support body attached to the vamp;
a light-emitting unit arranged on the support body;
a flexible touch sensor attached to the support body and covering the light-emitting unit; and
a control module electrically coupled to the light-emitting unit and the flexible touch sensor.

2. The shoe of claim 1, wherein the control module controls the light-emitting unit to emit light before the touch instruction is detected by the flexible touch sensor.

3. The shoe of claim 2, wherein the amount of the light-emitting unit is plural;
the control module controls the plurality of light-emitting units to emit light according to a preset manner;
the flexible touch sensor detects a touch instruction to the light-emitting units during a preset time period in which each of the light-emitting units is emitting light, and triggers the control module to count up when the touch instruction to the light-emitting units is detected.

4. The shoe of claim 1, wherein the control module controls the light-emitting unit to emit light after the touch instruction is detected by the flexible touch sensor.

5. The shoe of any one of claims 1 to 4, wherein the sole defines a groove on its one side corresponding to the opening, and the touch interaction device is partially received in the groove.

6. The shoe of claim 5, wherein the sole further defines, on its bottom surface, a recess communicating with the groove, and comprises a cover plate for sealing the recess, wherein the control module is received in the recess.

7. The shoe of claim 6, wherein the support body is attached to an upper surface of the vamp;
a flexible circuit board is arranged at a position of the support body corresponding to the groove, wherein the circuit board is electrically coupled to the plurality of light-emitting units and the flexible touch sensor through its one end, and an other end passes the groove and extends to the recess, and is electrically coupled to the control module.

8. The shoe of claim 7, wherein the shoe further comprises a cover, wherein the cover defines, on its lower surface, a limit recess for receiving the support body;
the cover further comprises a baffle plate arranged at a position corresponding to the groove, wherein the baffle plate is inserted into the groove to cover the flexible circuit board and seals the groove.

9. The shoe of claim 8, wherein the vamp, the support body and the cover are all provided with air holes that are correspondingly aligned and penetrated to each other.

10. The shoe of claim 5, wherein the control module is received in the groove.

11. The shoe of claim 10, wherein the support body comprises a holding portion arranged on a position corresponding to the groove, wherein the control module is arranged in the holding portion, and the touch interaction device is detachably coupled to the sole through an engagement of the holding portion and the groove.

12. The shoe of any one of claims 1 to 4, wherein the shoe further comprises an inner pad, wherein the support body is coupled to the inner pad, and is attached to a lower surface of the vamp; the inner pad is attached to an upper surface of the sole.

13. The shoe of claim 12, wherein the control module is arranged at a bottom of the inner pad, and electrically coupled to the light-emitting units and the flexible touch sensor;
the sole defines a receiving recess at a position corresponding to the control module for receiving the control module.

14. The shoe of any one of claims 1 to 4, wherein the light-emitting units is embedded in the support body; the support body defines air holes therein; and the light-emitting unit is close to the air holes and spaced apart from the air holes.

15. The shoe of claim 4, wherein the amount of the light-emitting unit is plural;
the flexible touch sensor is further configured to receive touch instructions to different light-emitting units; triggers, according to different positions at which the touch instructions are received, the control module to control at least one of the light-emitting units at the corresponding position to emit light; and triggers, according to different touch operations corresponding to the touch instructions, the control module to control the at least one of the light-emitting units at the corresponding position to change their illuminating states.

16. A control method of the shoe of any one of claims 1 to 15, comprising:
controlling, by the control module, the plurality of light-emitting units to emit light in a preset manner;
detecting, by the flexible touch sensor, a touch instruction to the plurality of light-emitting units during a preset time period in which each of the plurality of light-emitting units is emitting light; and
triggering the control module to count up when a touch instruction to the light-emitting units is detected.

17. The control method of claim 16, the control method further comprising the following after the touch instruction to the light-emitting units is detected:
triggering the light-emitting units to change colors; and
triggering an audio module to play a first prompt tone.

18. The control method of claim 16, the control method further comprising:
detecting a touch operation to the light-emitting units that aren't currently emitting light during a preset time period in which each of the plurality of light-emitting units is emitting light;
triggering an audio module to play a second prompt tone when the touch instruction to the light-emitting units is detected.

19. A control method of the shoe of any one of claims 1 to 15, comprising:
receiving, by the flexible touch sensor, a first touch instruction to at least one of the light-emitting units; and
controlling, by the control module, the at least one of the light-emitting units to changes illuminating colors.

20. The control method of claim 19, the control method further comprising:
receiving, by the flexible touch sensor, a second touch operation to at least one of the light-emitting units; and
controlling, by the control module, the at least one of the light-emitting units to blink.
